(19) Europäisches Patentamt
European Patent Office
Office européen des brevets

(11) EP 1 935 930 B1

(12) EUROPÄISCHE PATENTSCHRIFT

(45) Veröffentlichungstag und Bekanntmachung des Hinweises auf die Patenterteilung:
**02.03.2011 Patentblatt 2011/09**

(51) Int Cl.:
***C08J 5/18*** *(2006.01)* ***C08L 67/00*** *(2006.01)*
***C08K 5/3492*** *(2006.01)* ***B32B 27/18*** *(2006.01)*
***B32B 27/36*** *(2006.01)*

(21) Anmeldenummer: **07023794.6**

(22) Anmeldetag: **07.12.2007**

# (54) Ein-oder mehrschichtige, stabilisierte Polyesterfolie

Single layer or multilayer, stabilised polyester film

Feuille de polyester mono ou multicouches stabilisée

(84) Benannte Vertragsstaaten:
**DE ES FR GB IT NL TR**

(30) Priorität: **19.12.2006 DE 102006059888**
**03.01.2007 DE 102007001443**
**24.09.2007 DE 102007045581**

(43) Veröffentlichungstag der Anmeldung:
**25.06.2008 Patentblatt 2008/26**

(73) Patentinhaber: **Mitsubishi Polyester Film GmbH**
**65203 Wiesbaden (DE)**

(72) Erfinder:
- **Kliesch, Holger, Dr.**
  **65462 Ginsheim-Gustavsburg (DE)**
- **Murschall, Ursula, Dr.**
  **55283 Nierstein (DE)**
- **Fischer, Ingo**
  **65558 Heistenbach (DE)**
- **Jesberger, Martin, Dr.**
  **55122 Mainz (DE)**
- **Bothe, Lothar, Dr.**
  **55124 Mainz (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 815 089**
**WO-A-01/53091**
**WO-A-01/60613**
**FR-A- 2 812 299**
**US-A1- 2003 054 169**
**US-A1- 2004 067 379**
**US-A1- 2006 234 061**

EP 1 935 930 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine gegen UV-Licht stabilisierte, ein- oder mehrschichtige Polyesterfolie. Die Erfindung betrifft weiterhin ein Verfahren zur Herstellung der Folie und ihre Verwendung.

UV-Stabilisatoren für Polymere sind bekannt und stammen im Wesentlichen aus den Stoffgruppen Triazine, Benzotriazole, Benzophenone, sterisch gehinderte Amine (Hals = hindered amin light stabilizer) und vielen anderen. Eine Auflistung findet sich z. B. in DE-A-101 35 795. UV-stabilisierte, orientierte Polyesterfolien sind ebenfalls bekannt, und die besondere Wirksamkeit von Stabilisatoren aus der Klasse der Triazine für orientierte Folien ist ebenfalls beschrieben (siehe z. B. WO 98/06575).

In WO 98/06575 wird auch bereits auf die unterschiedliche Eignung innerhalb der Klasse der Triazine hingewiesen und das kommerziell erhältliche Tinuvin 1577 (= 2-(4,6-diphenyl-1,3,5-triazin-2-yl)-5-(hexyl)oxyphenol, Hersteller Ciba SC, CH) als besonders geeignet herausgestellt.

Auch die DE-A-101 35 795 lehrt, dass es Unterschiede innerhalb der Gruppe der Triazine gibt, und schlägt eine Reihe neuer und bekannter Triazine für den Einsatz in Folien vor. In dieser Schrift werden zwar auch Polyesterfolien erwähnt, beispielhaft ausgeführt werden aber nur Polyolefinfolien. Als geeignet genannt werden hier Triazine mit Bisphenyleinheiten (Beispiele Verbindungen a/b/c/d/e/f/g), aber auch das kommerziell erhältliche Tinuvin 1577 (Verbindung j) wird als besonders geeignet genannt. Hinzu kommen Kombinationen mit anderen UV-Stabilisatoren, u. a. Verbindungen aus der HALS-Gruppe. Insgesamt summieren sich die in den Formeln genannten potentiell geeigneten Stabilisatoren durch die Vielzahl möglicher Variationen auf mehrere 1000. Eine Übertragbarkeit von Polyolefinen auf (insbesondere aromatische) Polyester scheint nicht gegeben, da sich die UV-Absorptionen und die Verarbeitungsbedingungen deutlich unterscheiden und die Stabilisatoren entsprechend andere Eigenschaften haben müssen.

Sowohl die DE-A-101 35 795 als auch die WO 98/06575 nennen Tinuvin 1577 als besonders geeigneten, bevorzugten Stabilisator.

Trotz aller Vorteile besitzt Tinuvin 1577 jedoch immer noch erhebliche Nachteile, insbesondere bei der Verarbeitung in orientierten Polyesterfolien. So besitzt Tinuvin 1577 ebenso wie andere nicht polymere UV-Stabilisatoren in der Schmelze keinen nennenswerten Viskositätsanteil an der Gesamtviskosität der Schmelze. Da es aber in Konzentrationen von 1 bis 5 Gew.-% dosiert werden muss, um kommerziell verwertbare UV-Stabilitäten (mindestens gefordert sind in der Regel 5 Jahre Lebensdauer bei Außenbewitterung unter mitteleuropäischen Klimabedingungen bzw. 2 Jahre Floridatest) zu erreichen, kommt es bei der Folienproduktion zu einem erheblichen Viskositätsabfall. Dieser ist unerwünscht und führt zu Abrissen, Streifen und anderen Produktionsstörungen. Weiterhin kommt es beim Einsatz von Triazinverbindungen zu einer Geruchsentwicklung, die von vielen als störend empfunden wird. Außerdem haben Triazin-Verbindungen wie Tinuvin 1577 eine Restabsorption im sichtbaren Lichtspektrum, die zu einer Gelbfärbung der Folie führt.

Aufgabe der vorliegenden Erfindung war es, die oben genannten Nachteile zu überwinden und Polyesterfolien zur Verfügung zu stellen, die hinsichtlich ihrer UV-Stabilität mindestens genauso gut sind wie solche, die mit Tinuvin 1577 ausgerüstet sind; vorzugsweise sollten sie bezüglich dieser Eigenschaft sogar Polyesterfolien, welche mit Tinuvin 1577 ausgerüstet sind, überlegen sein. Überlegen heißt dabei, dass sich bei niedrigerer Einsatzkonzentration eine gleichlange oder längere Stabilität gegenüber UV-Strahlen ergibt. Eine geringere Einsatzkonzentration hat dabei neben den offensichtlichen wirtschaftlichen Vorteilen auch erhebliche technische Vorteile.

Gelöst wird diese Aufgabe durch den Einsatz von UV-Stabilisatoren der folgenden Strukturformel (I):

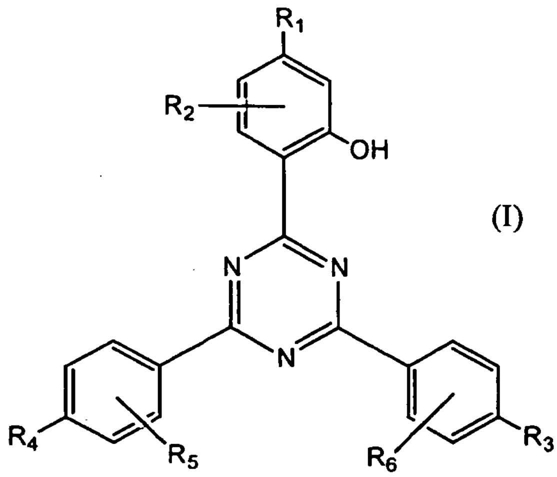

(I)

wobei

| | |
|---|---|
| $R_1$ | -H, -C1-C12-Alkyl, -Aryl, -S-(C1-C12)-Alkyl oder -O-$R_9$ oder -O-(C1-C5)-Alkylen-C(O)O-$R_9$ bedeutet, wobei $R_9$ -Aryl oder -C1-C12-Alkyl bedeutet, |
| $R_3$ und $R_4$ | 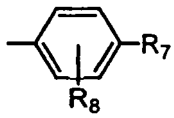 bedeuten und |
| $R_2$, $R_5$, $R_6$, $R_7$ und $R_8$ | unabhängig voneinander -H, -(C1-C12)-Alkyl, -0-(C1-C12)-Alkyl, -Aryl oder -O-Aryl bedeuten, |

wobei die genannten Alkylreste mit mehr als zwei C-Atomen und die Alkylenreste mit mehr als einem C-Atom linear oder verzweigt sein können.

Bevorzugt sind Verbindungen der Formel (I), in denen

| | |
|---|---|
| $R_1$ | -O-$R_9$ oder -O-CH($CH_3$)-C(O)O-$R_9$ ist, mit $R_9$ gleich Hexyl, Heptyl oder Octyl und |
| $R_2$, $R_5$, $R_6$, $R_7$ und $R_8$ | -H |

bedeuten.

Besonders bevorzugt sind Verbindungen der Formel (I), in denen

| | |
|---|---|
| $R_1$ | -O-$R_9$ ist, mit |
| $R_9$ | gleich Octyl, insbesondere 2-Ethyl-hexyl, und |
| $R_2$, $R_5$, $R_6$, $R_7$ und $R_8$ | -H |

bedeuten.

Besonders bevorzugt sind ebenfalls Verbindungen der Formel (I), in denen

| | |
|---|---|
| $R_1$ | -O-CH($CH_3$)-C(O)O-$R_9$ ist, mit |
| $R_9$ | gleich Octyl und |
| $R_2$, $R_5$, $R_6$, $R_7$ und $R_8$ | -H |

bedeuten.

Aryl bedeutet unsubstituiertes oder mit OH, Cl, Br, J, $NO_2$, $NH_2$, $SO_3H$, COOH, C1-C4-Alkyl oder C1-C4-Alkyloxy ein- oder mehrfach substituiertes Phenyl, Pyridyl, Naphthyl, Indanyl oder Indenyl, bevorzugt Phenyl, besonders bevorzugt unsubstituiertes Phenyl.

Besonders bevorzugt ist das als Tinuvin 479 von Ciba SC (CH) angebotene 2-(2-hydroxy-4-[1-octyloxycarbonylethoxy]phenyl)-4,6-bis(4-phenylphenyl)-1,3,5-triazin.

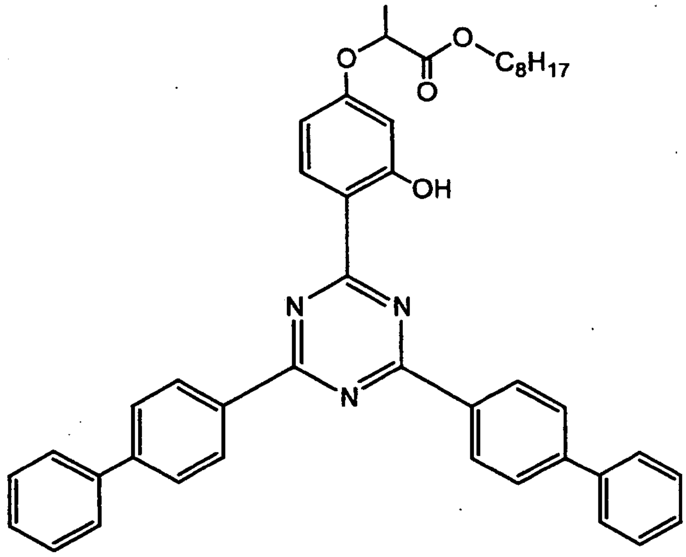

Ebenfalls bevorzugt ist die Verbindung der Formel (II)

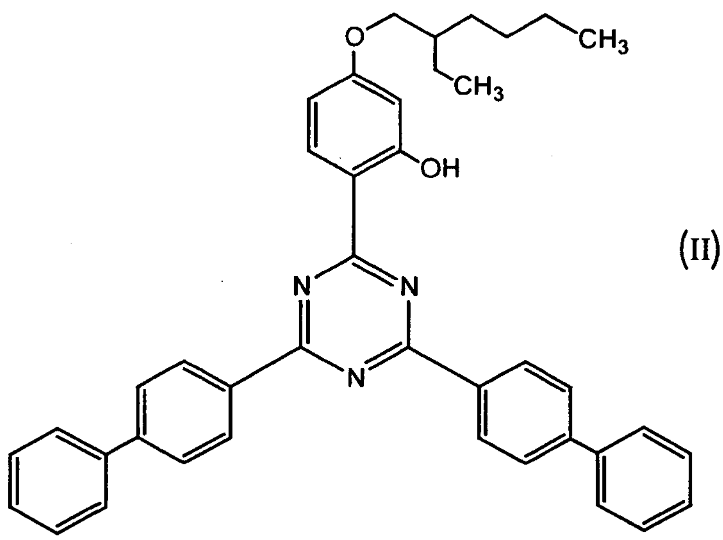

(II)

Die genannten UV-Stabilisatoren werden in Konzentrationen von 0,1 bis 10 Gew.%, bevorzugt 0,25 bis 4 Gew. % und besonders bevorzugt von 0,4 bis 2,5 Gew.%, eingesetzt.

Bei Verwendung der besonders bevorzugten Verbindungen Tinuvin 479 und der Verbindung der Formel (II) lässt sich mit der Hälfte der Tinuvin 1577-Konzentration die gleiche UV-Stabilität erzielen.

Die im Folgenden angegebenen Gewichtsprozente beziehen sich - sofern nichts anderes angegeben ist - immer auf die Masse derjenigen Schicht, in der die betreffende Substanz eingesetzt wird.

Das Polymer der Basisschicht B und der übrigen Schichten der Folie (ohne Berücksichtigung des UV-Stabilisators und der unten genannten sonstigen Additive) besteht bevorzugt zu mindestens 80 Gew.-% aus einem thermoplastischen Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB) und Polyester aus Isophthalsäure und Ethylenglycol sowie aus beliebigen Mischungen der genannten Carbonsäuren und Diole. Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n gleich 1 bis bevorzugt kleiner 10 ist.

Im Polymer für die Folie können weiterhin bis zu 20 Gew.-% andere Polymere wie z. B. Polyolefine (z. B. Cycloolefincopolymere, Polypropylen etc.), Polyamide oder Polyetherimide enthalten sein. Bevorzugt liegt dieser Anteil aber bei unter 10 Gew.-%, und besonders bevorzugt besteht das Polymer zu 100 Gew.-% aus den vorgenannten Polyestern.

Die Folie kann zusätzlich übliche Additive wie beispielsweise Stabilisatoren und/oder Antiblockmittel enthalten. Antiblockmittel werden dabei bevorzugt in den Deckschichten (Schichten A und C) einer Mehrschichtfolie (ABC, B = Basisschicht) eingesetzt. Als Stabilisatoren werden beispielsweise Phosphorverbindungen wie Phosphorsäure oder Phosphorsäureester eingesetzt. Weitere Additive sind z. B. Radikalfänger/Thermostabilisatoren (z. B. Irganox, bevorzugt Irganox1010).

Typische Antiblockmittel sind anorganische und/oder organische Partikel, beispielsweise Calciumcarbonat, kristalline oder amorphe Kieselsäure ($SiO_2$), Talk, Magnesiumcarbonat, Bariumcarbonat, Calciumsulfat, Bariumsulfat, Lithiumphosphat, Calciumphosphat, Magnesiumphosphat, Aluminiumoxid, Aluminiumsilikate, Lithiumfluorid, Calcium-, Barium-, Zink- oder Mangan-Salze der eingesetzten Dicarbonsäuren, Titandioxid, Kaolin oder vernetzte Polystyrol-, PMMA- oder Arcrylat-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Antiblockmittel können den einzelnen Schichten der Folie in den jeweils vorteilhaften Konzentrationen, z. B. als glykolische Dispersion während der Polykondensation oder über Masterbatche bei der Extrusion zugegeben werden. Üblicherweise liegen die Konzentrationen der Antiblockmittel nicht über 5 Gew.%, bevorzugt nicht über 1 Gew. % und die der Weißpigmente wie $TiO_2$ nicht über 20 Gew.%.

Zusätzlich zu den erfindungsgemäßen UV-Stabilisatoren können - sofern zweckmäßig - andere UV-Stabilisatoren (z. B. andere Triazine, Benzophenone etc.) eingesetzt werden (für eine Auswahl s. DE-A-101 35 795, Seite 8, Punkt 2), deren Konzentration bevorzugt bei weniger als 2 Gew.% und besonders bevorzugt bei weniger als 0,5 Gew. % liegt. Als ungünstig haben sich Verbindungen aus der HALS-Gruppe (hindered amin light stabilizers, sterisch gehinderte Amine, s. DE-A-101 35 795) erwiesen. Zum einen konnte - im Gegensatz zu der in Beispiel 7 der DE-A-101 35 795 für eine PP-Folie beschriebenen verlängerten Lebensdauer - beim Einsatz von HALS-Stabilisatoren in Polyesterfolien keine nennenswerte Verlängerung der Lebensdauer unter UV-Bestrahlung gemessen werden; darüber hinaus kam es während der Bewitterung zu einer schon nach 500 Stunden einsetzenden Gelbfärbung und ebenfalls zu einer deutlichen Gelbfärbung, wenn die Folie zum Wiedereinsatz regeneriert wurde.

In der am meisten bevorzugten Ausführungsform der Erfindung werden neben den erfindungsgemäßen keine weiteren UV-Stabilisatoren eingesetzt.

In einer bevorzugten Ausführungsform der Erfindung werden 0,01 bis 1 Gew.%, bevorzugt 0,01 bis 0,1 Gew. % Radikalfänger (Antioxidantien) einer oder mehreren Schichten der Folie hinzugegeben. Für eine Auswahl an Radikalfängern (Antioxidantien) s. DE-A-101 35 795, Seite 7, Punkt 1. Als besonders geeignet hat sich Irganox1010 (CAS-Nr. 6683-19-8) oder der Stabilisator mit der CAS-Nr. 065140-91-2 von Ciba SC (CH) erwiesen.

In einer weiteren bevorzugten Ausführungsform der Erfindung ist die Folie flammfest ausgerüstet. Als Flammstabilisatoren dienen dabei bevorzugt organische Phosphorverbindungen, die im Polyester löslich sind. Besonders bevorzugt sind Phosphorverbindungen, die in die Polyesterkette eingebaut werden, und dabei wieder bevorzugt solche, bei denen das/die Phosphoratome nicht in der Haupt-, sondern in eine Seitenkette eingebaut sind. Ein Beispiel für eine solche Verbindung, die in die Polyesterkette eingebaut werden kann, ist der Ester mit der CAS-Nr. 63562-34-5. Das Flammschutzmittel wird im Allgemeinen in einer solchen Konzentration zugegeben, dass der Phosphorgehalt aus dem Flammschutzmittel bei 0,1 bis 2 Gew. % liegt.

Die Gesamtdicke der erfindungsgemäßen Polyesterfolie beträgt 1 bis 500 $\mu$m, insbesondere 10 bis 50 $\mu$m, vorzugsweise 12 bis 30 $\mu$m.

Die Folie ist entweder ein- oder mehrschichtig, wobei alle genannten Einsatzmaterialien unabhängig voneinander in den Schichten verteilt sein können. Bei mehrschichtigen Folie hat es sich als vorteilhaft erwiesen, wenn die dem Licht zugewandte Deckschicht (oder bei beidseitiger Belichtung und mindestens dreischichtigen Folien beide Deckschichten) mehr UV-Stabilisator enthält als die innen liegende(n) Schicht/Schichten.

Wirtschaftlich und technisch besonders günstig sind dabei Ausführungsformen, in denen sich bei mehr als zweischichtigen Folien mehr als 25 % und bevorzugt mehr als 30 % und besonders bevorzugt mehr als 35 %, des UV-Stabilisators in der/den Außenschicht(en) befinden, und besonders bevorzugt befinden sich in einer Außenschicht mehr als 25 % und bevorzugt mehr als 30 % und besonders bevorzugt mehr als 35 % des Stabilisators.

Es hat sich dabei als günstig erwiesen, wenn keine Schicht mehr als 7 Gew.-% und bevorzugt keine Schicht mehr als 5 Gew.-% UV-Stabilisator enthält, da die durch den Streckprozess hervorgerufene Zunahme der Kristallinität

die Löslichkeit des UV-Stabilisators in der Polyestermatrix verringert und es zum Ausschwitzen des Stabilisators kommen kann. Hier hat sich Tinuvin 479 als besonders günstig erwiesen, da dieses offenbar mit der Polyestermatrix reagiert und kovalente Bindungen eingeht und so eine besonders niedrige Migration aufweist.

In mehrschichtigen Ausführungsformen hat es sich als günstig erwiesen, wenn mindestens die ersten beiden dem einfallenden Licht zugewandten Schichten UV-Stabilisator enthalten. Der Anteil an UV-Stabilisator sollte dabei bevorzugt in keiner dieser beiden Schichten unter 0,1 Gew.-% liegen. Es hat sich bei transparenten Ausführungsformen (Transparenz > 50 %) als günstig erwiesen, wenn alle Schichten der Folie mindestens 0,1 Gew.-% UV-Stabilisator enthalten.

Wenn die dem Licht zugewandte Schicht der Folie weniger als 4 Gew.-% eines Weißpigmentes (z. B. $TiO_2$, $BaSO_4$, $CaCO_3$ etc.) mit einer mittleren Teilchengröße $d_{50}$ von mehr als 200 nm enthält, hat es sich als günstig erwiesen, wenn die Außenschicht mindestens 0,75 Gew.-% UV-Stabilisator und besonders bevorzugt mindestens 1,0 Gew.-% UV-Stabilisator enthält.

In einer bevorzugten Ausführungsform weist die erfindungsgemäße Folie bei 200 °C einen Schrumpf in Längs- und Querrichtung von unter 10 %, bevorzugt unter 6 % und besonders bevorzugt unter 4 %, auf. Die Folie weist weiterhin bei 100 °C eine Ausdehnung von weniger als 3 %, bevorzugt weniger als 1 % und besonders bevorzugt weniger als 0,3 %, auf. Diese Formstabilität kann beispielsweise durch geeignete Relaxation der Folie vor dem Aufwickeln erhalten werden (s. Verfahrensbeschreibung).

In einer bevorzugten Ausführungsform weist die Folie zudem einen E-Modul in beiden Folienrichtungen von größer 3000 $N/mm^2$ und bevorzugt von größer 3500 $N/mm^2$ und besonders bevorzugt > 4100 $N/mm^2$ in Längs- und Querrichtung auf. Die F5-Werte (Kraft bei 5 % Dehnung) liegen bevorzugt in Längs- und Querrichtung bei über 80 $N/mm^2$ und bevorzugt bei über 90 $N/mm^2$. Diese mechanischen Eigenschaften können beispielsweise durch geeignete biaxiale Streckung der Folie erhalten werden (s. Verfahrensbeschreibung).

Die genannten Schrumpf- und Mechanikwerte führen dazu, dass die Haltbarkeit der Folie bei Alterung durch UV-Bestrahlung und sonstige Wettereinflüsse wie Hitze und Wasser günstig beeinflusst wird.

In einer weiteren bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäure-Gehalten > 0,2 Gew.%.

Verfahren

Die Polyester-Matrixpolymere der einzelnen Schichten werden durch Polykondensation hergestellt, entweder ausgehend von Dicarbonsäuren und Ethylenglykol (sog. "PTA-Verfahren") oder auch ausgehend von den Estern der Dicarbonsäuren, vorzugweise die Dimethylester, und Ethylenglykol (sog. "DMT-Verfahren"). Verwendbare Polyethylenterephthalate haben bevorzugt SV-Werte im Bereich von 600 bis 900 und Polyethylen-2,6-naphthalate von ca. 500 bis 800.

Die Partikel - sofern vorhanden - können bereits bei der Herstellung des Polyesters zugegeben werden. Hierzu werden die Partikel in Ethylenglykol dispergiert, gegebenenfalls gemahlen, dekantiert usw. und dem Reaktor entweder im (Um)-Esterungs- oder Polykondensationsschritt zugegeben. Bevorzugt kann alternativ ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Eine weitere Möglichkeit besteht darin, Partikel und Additive direkt bei der Folienextrusion in einem Zweischneckenextruder zuzugeben.

Nicht vernetzte organische Partikel werden entweder in einem Zweischneckenextruder zu einem Masterbatch verarbeitet oder direkt bei der Folienextrusion zugegeben.

Die UV-Stabilisatoren können der Folie über die Masterbatchtechnologie zugegeben werden. Dazu wird ein Polyesterrohstoff in einem Zweischneckenextruder aufgeschmolzen und der UV-Stabilisator hinzugegeben. Die Mischung wird anschließend durch eine Lochdüse extrudiert und in einem Wasserbad abgeschreckt und granuliert. Es hat sich als günstig erwiesen, wenn die Gehalte an UV- Stabilisator im Masterbatch bei 1 bis 33 Gew.-%, bevorzugt bei 5 bis 25 Gew.-% und besonders bevorzugt bei 10 bis 20 Gew.-%, liegen. Geringere Gehalte sind eher unwirtschaftlich, und ab etwa 25 Gew.-% kommt es zu einer ungenügenden Einbindung des UV-Stabilisators in die Polyestermatrix, die oberhalb von 33 Gew.-% zu sichtbaren "Ausschwitzungen" führt.

Die UV-Stabilisatoren können auch direkt bei der Folienherstellung zugegeben werden. Hierzu wird der Stabilisator in den entsprechenden Mengen direkt in den Extruder dosiert. Dies führt jedoch nur bei der Verwendung von Mehrschneckenextrudern (mindestens zwei) zu wirklich guten Verteilungsergebnissen.

Es hat sich zudem als günstig erwiesen, wenn der Extrudereinzug mit einem Schutzgasstrom überschichtet wird (z. B. Stickstoff oder Argon), da die erfindungsgemäßen UV-Stabilisatoren sowohl bei der Direktextrusion an der Folienanlage als auch bei der Masterbatchherstellung empfindlich auf oxidativen Stress durch die hohen Extrusionstemperaturen reagieren.

Wenn Einschneckenextruder verwendet werden, dann hat es sich als vorteilhaft erwiesen, die Polyester vorher

zu trocknen. Bei Verwendung eines Zweischneckenextruders mit Entgasungszone kann auf den Trocknungsschritt verzichtet werden.

Zunächst wird das Polymere bzw. die Polymermischung der Schicht oder bei Mehrschichtfolien der einzelnen Schichten in Extrudern komprimiert und verflüssigt. Dann werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlen und sich verfestigen.

Die erfindungsgemäße Folie wird biaxial orientiert, d. h. biaxial gestreckt. Die biaxiale Verstreckung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufender Walzen durchführen. Zum Querverstrecken benutzt man im Allgemeinen einen entsprechenden Kluppenrahmen.

Statt der sequenziellen Streckung ist auch eine simultane Streckung der Folie möglich, aber nicht notwendig.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140 °C (Ende der Streckung) durchgeführt. Das Längsstreckverhältnis liegt im Bereich von 2,0:1 bis 5,5:1, bevorzugt von 2,2:1 bis 5,0:1. Das Querstreckverhältnis liegt allgemein im Bereich von 2,4:1 bis 5,0:1, bevorzugt von 2,6:1 bis 4,5:1.

Zum Erreichen der gewünschten Folieneigenschaften hat es sich als vorteilhaft erwiesen, wenn die Strecktemperatur (in MD- und TD-Richtung) unter 125 °C und bevorzugt unter 118 °C liegt.

Vor der Querstreckung können eine oder beide Oberfläche(n) der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie und zu einer Verbesserung des antistatischen Verhaltens oder des Verarbeitungsverhaltens der Folie führen. Wenn die äußeren coextrudierten Schichten keine anorganischen Partikel zur Verbesserung der Schlupf- und Wickelcharakteristik enthalten, so kann an dieser Stelle eine partikelhaltige Beschichtung aufgebracht werden.

Anschließend wird die Folie thermofixiert.

Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpfwerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Bevorzugt finden < 25 % und > 5 % der Gesamtrelaxation innerhalb der ersten 25 % der Relaxationszeit statt. Anschließend wird die Folie in üblicher Weise aufgewickelt.

Erfindungsgemäß enthält das Polymere für mindestens eine Schicht der Folie einen UV-Stabilisator der Formel (I).

Bei der Herstellung der Folie ist gewährgeleistet, dass das Regenerat in einer Konzentration von 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden.

Die erfindungsgemäße Folie zeichnet sich durch eine sehr gute UV-Beständigkeit, eine geringe Eigenfarbe und einen gegenüber Tinuvin 1577 verringerten UV-Stabilisatorgehalt bei gleicher UV-Stabilität und eine verringerte Geruchsbelästigung in der Folienherstellung aus. Zudem hat sich gezeigt, dass aufgrund der durch die neuen Stabilisatoren geringeren Dosierung die Druckschwankungen in der Folienproduktion bei Hin- und Rückumstellungen zwischen UV-stabilisierten und unstabilisierten Typen verringert werden konnten und so weniger Abrisse im Bereich dieser Umstellungen auftraten.

Zur Charakterisierung der Rohstoffe und der Folien wurden die folgenden Messmethoden benutzt:

**Messung des mittleren Partikel-Durchmessers $d_{50}$**

Die Bestimmung des mittleren Durchmessers $d_{50}$ wird mittels Laser auf einem Horiba LA 500 mittels Laserdiffraktion durchgeführt (andere Messgeräte sind z. B. Malvern Master Sizer oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert.

**Primärkorngröße von Nanoteilchen (z. B. Aerosil® und Nyacol®)**

Die Bestimmung der mittleren Größe der Primärteilchen erfolgt an transmissionselektronenmikroskopischen (TEM-) Aufnahmen des zu untersuchenden Produktes. Wenn die Probe als Folie oder Kunststoffgranulat vorliegt, so ist die TEM-Untersuchung an Mikrotomschnitten durchzuführen.

**Transparenz**

Die Transparenz wird nach ASTM-D 1033-77 gemessen.

**SV-Wert (standard viscosity)**

Die Standardviskosität SV (DCE) wird, angelehnt an DIN 53 726, bei einer Konzentration von 1 Gew.-% in Dichloressigsäure gemessen. Aus der relativen Viskosität ($\eta_{rel}$) wird der dimensionslose SV-Wert wie folgt ermittelt:

$$SV = (\eta_{rel} - 1) \times 1000$$

Die intrinsische Viskosität (IV) korreliert wie folgt mit der Standardviskosität

$$IV\ [\eta] = 6{,}907 \cdot 10^{-4}\ SV\ (DCE) + 0{,}063096\ [dl/g]$$

**Mechanische Eigenschaften**

Die mechanischen Eigenschaften werden über Zugprüfung angelehnt an DIN EN ISO 572-1 und -3 an 100 mm x 15 mm großen Folienstreifen bestimmt. Die Längenänderung wird über einen Traversenwegaufnehmer gemessen. Der E-Modul wird bei einer Zuggeschwindigkeit von 10 %/min als Steigung zwischen 0,2 und 0,3 Dehnung bestimmt. Der σ5-Wert (Kraft bei 5 % Dehnung) wird mit einer Zuggeschwindigkeit von 100 %/min gemessen.

**Schrumpf**

Der thermische Schrumpf wird an quadratischen Folienmustern mit einer Kantenlänge von 10 cm bestimmt. Die Proben werden genau ausgemessen (Kantenlänge $L_0$), 15 min bei 200 °C in einem Umlufttrockenschrank getempert und anschließend bei Raumtemperatur genau ausgemessen (Kantenlänge L). Der Schrumpf ergibt sich aus der Gleichung

$$\text{Schrumpf}\ [\%] = 100\ (L_0 - L) / L_0$$

**UV-Stabilität**

Die UV-Stabilität wird wie in DE-A-697 31 750 (DE-Äquivalent von WO 98/06575) auf Seite 8 beschrieben bestimmt und der UTS-Wert in % vom Ausgangswert angegeben. Zur Bewitterungszeit s. nachfolgende Beispiele.

**Geruchsbelästigung in der Produktion**

Da Geruchsbelästigung eine subjektive Größe ist, werden 10 Mitarbeiter unabhängig voneinander nach 30 min Produktionszeit zur Geruchswahrnehmung befragt. Jeder Mitarbeiter hat dabei den Geruch auf einer Skala von 1 - 4 bewertet (s. unten). Die vergebenen Skalenwerte werden summiert und durch die Anzahl der Mitarbeiter dividiert und als Mittelwert ausgegeben. Skalenwert:

1 Kein gegenüber "normaler" Polyesterfolienproduktion wahrnehmbarer zusätzlicher Geruch
2 Leichter zusätzlicher Geruch wahrnehmbar (nicht störend)
3 Deutlich wahrnehmbarer Geruch (störend)
4 Starker zusätzlicher Geruch (sehr störend/unangenehm)

**Beispiele**

**Vergleichsbeispiel 1**

Das Beispiel 1 aus DE-A-697 31 750 (DE-Äquivalent von WO 98/06575) wurde nachgestellt mit den folgenden Unterschieden:

Mangels eines Rohstoffs mit 6 µm großen Siliziumdioxid-Partikeln wurden 1,1 Gew.-% des Siliziumdioxidtyps Silysia 440 (von Fuji Silysia, JP, mit $d_{50}$ ca. 4,4 µm) eingesetzt. Der Polyethylenterephthalatrohstoff für die nicht siegelfähige Schicht (IPA-Gehalt 0,05 Gew.-%, Diethylenglykol 0,7 Gew.-%) enthielt 1 Gew.-% Tinuvin 1577 (Ciba SC, Schweiz). Das Tinuvin wurde über ein Masterbatch mit 10 Gew.-% Tinuvin 1577 in PET eingebracht.
Die Hitzestabilisierung (Fixierung) wurde wie folgt durchgeführt:

| | | | |
|---|---|---|---|
| Fixierung | Temperatur | 225 - 150 | °C |
| | Dauer | 2 | s |
| | Relaxation in TD-Richtung bei 200 bis 150 °C | 3 | % |

Der Geruch wurde mit 2,5 bewertet.
Bei der Umstellung auf diesen Typ wurden leichte Druckschwankungen in der Düse beobachtet. Der Zugfestigkeitswert (UTS) betrug nach 1000 Stunden Bewitterung 69 % des Ausgangswertes.

**Beispiel 1**

Wie Vergleichsbeispiel 1, aber 0,5 Gew.-% Tinuvin 479 (Ciba SC, CH).
Der Geruch wurde mit 1,4 bewertet.
Bei der Umstellung auf diesen Typ wurden keine Druckschwankungen in der Düse beobachtet.
Der Zugfestigkeitswert (UTS) betrug nach 1000 Stunden Bewitterung 74 % des Ausgangswertes.

**Beispiel 2**

Wie Beispiel 1, aber 1,0 Gew.-% Tinuvin 479 (Ciba SC, CH).
Bei der Umstellung auf diesen Typ wurden leichte Druckschwankungen in der Düse beobachtet.
Der Geruch wurde mit 1,8 bewertet.
Der Zugfestigkeitswert (UTS) betrug nach 1000 Stunden Bewitterung 89 % des Ausgangswertes.

**Beispiel 3**

Es wurde eine dreischichtige Folie der Dicke 20 µm produziert.
Die Polymermischungen wurden in einem Adapter zusammengeführt und durch eine Breitschlitzdüse auf eine auf 60 °C temperierte Kühlwalze elektrostatisch angelegt. Anschließend wurde die Folie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,7 | |
| Querstreckung | Aufheiztemperatur | 100 | °C |
| | Strecktemperatur | 110 | °C |
| | Querstreckverhältnis | 4,0 | |
| Fixierung | Temperatur | 237 - 150 | °C |
| | Dauer | 2 | s |
| | Relaxation in TD bei 200 - 150 °C | 7 | % |

Es wurden 3 Polymer-Mischungen in 3 Zweischnecken-Extrudern bei 290 °C aufgeschmolzen:

1. 70 Gew.% Polyethylenterephthalat mit einem SV-Wert von 800 mit 0,1 Gew.-% $SiO_2$ Silysia 340 (Fuji Silysia, JP) und 30 Gew.% eines Polyethylenterephthalatmasterbatches mit einem SV-Wert von 700 und einem Tinuvin 479-Gehalt von 20 Gew.% → Schicht A

2. 98 Gew.% Polyethylenterephthalat mit einem SV-Wert von 800 und 2 Gew.% eines Polyethylenterephthalatmasterbatches mit einem SV-Wert von 700 und einem Tinuvin 479-Gehalt von 20 Gew.% → Schicht B

3. 99 Gew.% Polyethylenterephthalat mit einem SV-Wert von 800 mit 0,1 Gew.% $SiO_2$ Silysia 340 (Fuji Silysia, JP) und 1 Gew.% eines Polyethylenterephthalatmasterbatches mit einem SV-Wert von 700 und einem Tinuvin 479-Gehalt von 20 Gew.% → C-Schicht

Tinuvin 479 wurde in fertiges PET-Polymer mittels eines Zweischneckenextruders eingebracht. Die $SiO_2$-Partikel wurden bereits bei der Polykondensation hinzugegeben. Der IPA(=Isophalsäure)-Gehalt der Polyester lag bei 0,1 Gew.-% und der DEG (Dieethylenglykol)-Gehalt bei 1 Gew.-%.

Die Polymermischungen wurden in einem Adapter zusammengeführt und durch eine Breitschlitzdüse auf eine auf 60 °C temperierte Kühlwalze elektrostatisch angelegt. Anschließend wurde die Folie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,7 | |
| Querstreckung | Aufheiztemperatur | 100 | °C |
| | Strecktemperatur | 110 | °C |
| | Querstreckverhältnis | 4,0 | |
| Fixierung | Temperatur | 237 - 150 | °C |
| | Dauer | 2 | s |
| | Relaxation in TD bei 200 - 150 °C | 7 | % |

Die so erhaltene Folie hatte eine Gesamtdicke von 20 µm, und die Deckschicht A war 5 µm und die Deckschicht C war 2 µm dick. Die Transparenz betrug 88 %, das E-Modul in MD-Richtung 4920 $N/mm^2$ und in TD-Richtung 5105 $N/mm^2$. Der F5-Wert lag in MD-Richtung bei 100 $N/mm^2$ und in TD-Richtung bei 102 $N/mm^2$. Der Schrumpf in MD-Richtung bei 200 °C lag bei 2,7 % und bei 0,1 % in TD-Richtung.

Bei der Umstellung auf diesen Typ wurden keine Druckschwankungen im Extruder der Basisschicht B in der Düse beobachtet. Leichte Schwankungen im Extruder der Schicht A hatten aufgrund der dickeren stabilen Basisschicht B keinen Einfluss auf die Laufsicherheit der Folienanlage.

Der Geruch wurde mit 1,8 bewertet.

Der Zugfestigkeitswert (UTS) betrug nach 1000 Stunden Bewitterung (Lichteinfall durch Schicht A 91 % des Ausgangswertes und nach 3000 h 67 % des Ausgangswertes.

**Beispiel 4**

Wie Vergleichsbeispiel 1, aber 0,5 Gew.-% der Verbindung der Formel (II) (CGX UVA 006, Ciba SC, CH).

Der Geruch wurde mit 1,8 bewertet.

Bei der Umstellung auf diesen Typ wurden keine Druckschwankungen in der Düse beobachtet.

Der Zugfestigkeitswert (UTS) betrug nach 1000 Stunden Bewitterung 70 % des Ausgangswertes

## Patentansprüche

1. Biaxial orientierte, ein- oder mehrschichtige Polyesterfolie, **dadurch gekennzeichnet, dass** sie mindestens einen UV-Stabilisator der Strukturformel (I) enthält:

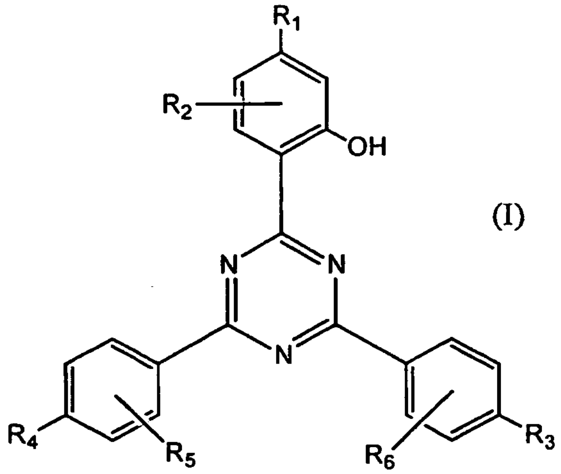

(I)

wobei

$R_1$ -H, -C1-C12-Alkyl, -Aryl, -S-(C1-C12)-Alkyl oder -O-$R_9$ oder -O-(C1-C5)-Alkylen-C(O)O-$R_9$ bedeutet, wobei $R_9$ -Aryl oder -C1-C12-Alkyl bedeutet,
$R_3$ und $R_4$

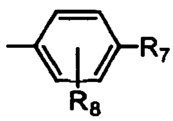

bedeuten und
$R_2$, $R_5$, $R_6$, $R_7$ und $R_8$ unabhängig voneinander -H, -(C1-C12)-Alkyl, -(C1-C12)-Alkyl, -Aryl oder -O-Aryl bedeuten,

wobei die genannten Alkylreste mit mehr als zwei C-Atomen und die Alkylenreste mit mehr als einem C-Atom linear oder verzweigt sein können.

2. Polyesterfolie nach Anspruch 1, **dadurch gekennzeichnet, dass** sie mindestens einen UV-Stabilisator der Strukturformel (I) enthält, in der

$R_1$ -O-$R_9$ oder -O-CH($CH_3$)-C(O)O-$R_9$ ist, mit
$R_9$ gleich Hexyl, Heptyl oder Octyl und
$R_2$, $R_5$, $R_6$, $R_7$ und $R_8$ -H

bedeuten.

3. Polyesterfolie nach Anspruch 1, **dadurch gekennzeichnet, dass** sie mindestens einen UV-Stabilisator der Strukturformel (I) enthält, in der

$R_1$ -O-$R_9$ ist, mit
$R_9$ gleich Octyl, insbesondere 2-Ethyl-hexyl, und
$R_2$, $R_5$, $R_6$, $R_7$ und $R_8$ -H

bedeuten.

4. Polyesterfolie nach Anspruch 1 oder 2, **dadurch gekennzeichnet, dass** sie mindestens einen UV-Stabilisator der Strukturformel (I) enthält, in der

$R_1$ -O-CH($CH_3$)-C(O)O-$R_9$ ist, mit
$R_9$ gleich Octyl und
$R_2$, $R_5$, $R_6$, $R_7$ und $R_8$ -H

bedeuten.

**5.** Polyesterfolie nach einem der Ansprüche 1 bis 4, **dadurch gekennzeichnet, dass** sie einschichtig ist.

**6.** Polyesterfolie nach einem der Ansprüche 1 bis 4, **dadurch gekennzeichnet, dass** sie mehrschichtig ist.

**7.** Polyesterfolie nach einem der Ansprüche 1 bis 6, **dadurch gekennzeichnet, dass** sie einen oder mehrere UV-Stabilisatoren der Formel (I) in einer Konzentrationen von 0,1 bis 10 Gew.% enthält (bezogen auf die Masse der Schicht, in der der UV-Stabilisator enthalten ist).

**8.** Polyesterfolie nach einem der Ansprüche 1 bis 7, **dadurch gekennzeichnet, dass** sie einen oder mehrere Stabilisatoren und/oder Antiblockmittel enthält.

**9.** Polyesterfolie nach einem der Ansprüche 1 bis 8, **dadurch gekennzeichnet, dass** sie einen Radikalfänger enthält.

**10.** Polyesterfolie nach einem der Ansprüche 1 bis 9, **dadurch gekennzeichnet, dass** sie ein Flammschutzmittel enthält.

**11.** Polyesterfolie nach einem der Ansprüche 6 bis 10, **dadurch gekennzeichnet, dass** sie mehr als zweischichtig ist und sich mehr als 25 % des UV-Stabilisators in einer oder beiden Außenschicht(en) befinden.

**12.** Polyesterfolie nach einem der Ansprüche 6 bis 11, **dadurch gekennzeichnet, dass** sie mehr als zweischichtig ist und sich in einer Außenschicht mehr als 25 % des UV-Stabilisators befinden.

**13.** Polyesterfolie nach einem der Ansprüche 6 bis 12, **dadurch gekennzeichnet, dass** keine Schicht mehr als 7 Gew.-% UV-Stabilisator enthält (bezogen auf die Masse der Schicht, in der der UV-Stabilisator enthalten ist).

**14.** Polyesterfolie nach einem der Ansprüche 1 bis 13, **dadurch gekennzeichnet, dass** sie bei 200 °C einen Schrumpf in Längs- und Querrichtung von unter 10 % aufweist.

**15.** Polyesterfolie nach einem der Ansprüche 1 bis 14, **dadurch gekennzeichnet, dass** sie bei 100 °C eine Ausdehnung von weniger als 3 % aufweist.

**16.** Polyesterfolie nach einem der Ansprüche 1 bis 15, **dadurch gekennzeichnet, dass** sie einen E-Modul von größer 3000 N/$mm^2$ in Längs- und Querrichtung aufweist.

**17.** Polyesterfolie nach einem der Ansprüche 1 bis 16, **dadurch gekennzeichnet, dass** sie einen F5-Wert (Kraft bei 5 % Dehnung) in Längs- und Querrichtung von über 80 N/$mm^2$ aufweist.

**18.** Verfahren zur Herstellung einer Polyesterfolie nach Anspruch 1, wobei das Polymere bzw. die Polymermischung der Schicht oder bei Mehrschichtfolien der einzelnen Schichten in Extrudern komprimiert und verflüssigt wird, dann in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen wird, anschließend biaxial gestreckt, thermofixiert und dann aufgerollt wird, **dadurch gekennzeichnet, dass** das Polymere für mindestens eine Schicht der Folie einen UV-Stabilisator der Formel (I) enthält.

## Claims

**1.** Biaxially oriented mono- or multilayered polyester film, **characterized in that** it comprises at least one UV stabilizer according to formula (I):

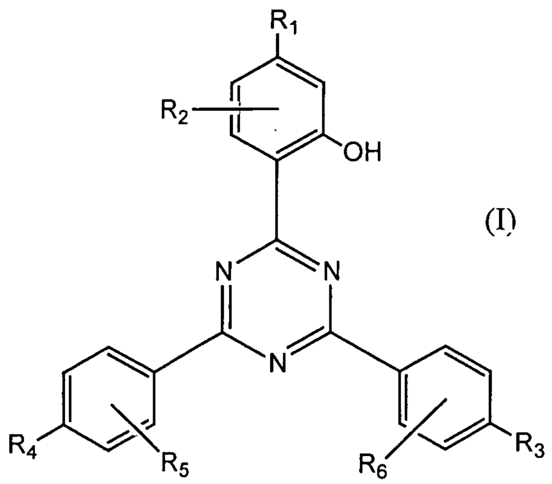

(I)

wherein

$R_1$ is -H, -(C1-C12)-Alkyl, -aryl, -(C1-C12)-Alkyl, or -O-$R_9$ or -O-(C1-C5)-alkylene-C(O)O-$R_9$, wherein
$R_9$ is -aryl or -C1-C12-alkyl ,
$R_3$ and $R_4$ are

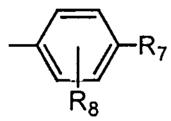

and
$R_2$, $R_5$, $R_6$, $R_7$ and $R_8$ independently from each other represent -H, -(C1-C12)-alkyl, -O-(C1-C12)-alkyl, -aryl or -O-aryl ,

wherein said alkyl radicals with more than two C-atoms and alkylene radicals with more than one C-atom can be linear or branched.

**2.** The polyester film of claim 1 containing at least one UV stabilizer according to formula (I) wherein:

$R_1$ represents -O-$R_9$ or -O-CH(CH3)-C(O)O-$R_9$ , wherein
$R_9$ stands for hexyl, heptyl or octyl and
$R_2$, $R_5$, $R_6$, $R_7$ and $R_8$ represent -H.

**3.** The polyester film of claim 1 or 2 containing at least one UV stabilizer according to formula (I) wherein:

$R_1$ is -O-$R_9$, wherein
$R_9$ is octyl, specifically preferred 2-ethyl hexyl, and
$R_2$, $R_5$, $R_6$, $R_7$ and $R_8$ represent -H.

**4.** The polyester film of claim 1 or 2 containing at least one UV stabilizer according to formula (I) wherein:

$R_1$ is -O-CH($CH_3$)-C(O)O-$R_9$ , wherein
$R_9$ stands for octyl and
$R_2$, $R_5$, $R_6$, $R_7$ and $R_8$ represent -H.

**5.** The polyester film according to one of the claims 1 to 4 wherein the film is mono-layered.

**6.** The polyester film according to one of the claims 1 to 4 wherein the film is multilayered.

**7.** The polyester film according to one of the claims 1 to 6 containing one ore more UV stabilizers according to fomula (I) in an amount of from 0.1 to 10% by weight (relative to the mass of the layer containing the UV stabilizer).

**8.** The polyester film according to one of the claims 1 to 7 wherein the film contains one or more stabilizers and/or antiblocking agents.

**9.** The polyester film according to one of the claims 1 to 8 wherein the film contains a radical scavenger.

**10.** The polyester film according to one of the claims 1 to 9 wherein the film contains a flame retardant.

**11.** The polyester film according to one of the claims 6 to 10 wherein the film has more than two layers and more than 25% of the UV stabilizer is contained in one or both outer layer(s).

**12.** The polyester film according to one of the claims 6 to 11 wherein the film has more than two layers and more than 25% of the UV stabilizer is contained in one outer layer.

**13.** The polyester film according to one of the claims 6 to 12 wherein no layer contains more than 7% by weight of UV stabilizer (relative to the mass of the layer containing the UV stabilizer).

**14.** The polyester film according to one of the claims 1 to 13 wherein the film shrinkage at 200 °C in longitudinal and transverse direction is less than 10%.

**15.** The polyester film according to one of the claims 1 to 14 wherein the film expansion at 100 °C is less than 3%.

**16.** The polyester film according to one of the claims 1 to 15 wherein the elastic modulus in longitudinal and transverse direction is greater than 3000 $N/mm^2$.

**17.** The polyester film according to one of the claims 1 to 16 wherein the F5-value (force at 5% extension) in longitudinal and transverse direction is greater than 80 $N/mm^2$.

**18.** Process for the manufacture of a polyester film of claim 1, wherein the polymer or polymer mixture of the layer, or in case of multilayer films of the individual layers are first compressed and plastified in extruders, then formed through a single- or multilayer nozzle into a flat plastified film which is pressed through a slit die and drawn off via a chill roll and one ore more take-up rolls and subsequently biaxially stretched, heat set and wound up, **characterized in that** at least one layer of the film comprises a UV stabilizer according to formula (I).

## Revendications

**1.** Feuille de polyester orientée biaxialement présentant une ou plusieurs couches, **caractérisée en ce qu'**elle contient au moins un stabilisant UV de formule structurelle (I) suivants :

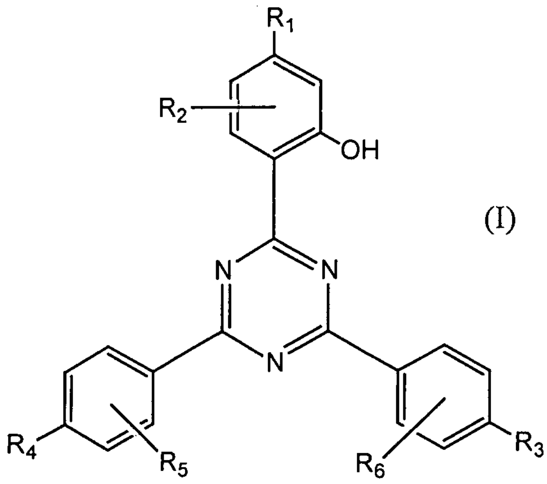

(I)

dans laquelle

$R_1$ représente -H, un groupement -alkyle en $C_1$-$C_{12}$, -aryle, -S-alkyle en $C_1$-$C_{12}$ ou -O-$R_9$ ou -O-alkylène ($C_1$-$C_5$)-C(O)O-$R_9$, $R_9$ représentant un groupement -aryle ou -alkyle en $C_1$-$C_{12}$,
$R_3$ et $R_4$ représentent

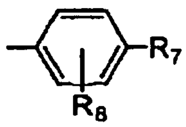

et
$R_2$, $R_5$, $R_6$, $R_7$ et $R_8$ représentent, indépendamment l'un de l'autre, -H, un groupement -alkyle en $C_1$-$C_{12}$, -O-alkyle en $C_1$-$C_{12}$, -aryle ou -O-aryle,

dans laquelle les radicaux alkyle cités ayant plus de deux atomes de carbone et les radicaux alkylène ayant plus d'un atome de carbone peuvent être linéaires ou ramifiés.

**2.** Feuille de polyester selon la revendication 1, **caractérisée ce qu'**elle contient au moins un stabilisant UV répondant à la formule structurelle (I), dans laquelle
$R_1$ représente -O-$R_9$ ou -O-CH($CH_3$)-C(O)O-$R_9$, avec
$R_9$ représentant un groupement hexyle, heptyle ou octyle, et
$R_2$, $R_5$, $R_6$, $R_7$ et $R_8$ représentant -H.

**3.** Feuille de polyester selon la revendication 1, **caractérisée ce qu'**elle contient au moins un stabilisant UV répondant à la formule structurelle (I), dans laquelle
$R_1$ représente -O-$R_9$, avec
$R_9$ représentant un octyle, en particulier le 2-éthylhexyle, et
$R_2$, $R_5$, $R_6$, $R_7$ et $R_8$ représentant -H.

**4.** Feuille de polyester selon la revendication 1 ou 2, **caractérisée en ce qu'**elle contient au moins un stabilisant UV répondant à la formule structurelle (I), dans laquelle
$R_1$ représente -O-CH($CH_3$)-C(O)O-$R_9$, avec
$R_9$ représentant un octyle, et
$R_2$, $R_5$, $R_6$, $R_7$ et $R_8$ représentant -H.

**5.** Feuille de polyester selon l'une quelconque des revendications 1 à 4, **caractérisée en ce qu'**elle présente une seule couche.

**6.** Feuille de polyester selon l'une quelconque des revendications 1 à 4, **caractérisée en ce qu'**elle présente plusieurs couches.

**7.** Feuille de polyester selon l'une quelconque des revendications 1 à 6, **caractérisée en ce qu'**elle contient un ou plusieurs stabilisants UV répondant à la formule (I) en concentration de 0,1 à 10 % en poids (par rapport à la masse de la couche dans laquelle est contenu le stabilisant UV).

**8.** Feuille de polyester selon l'une quelconque des revendications 1 à 7, **caractérisée en ce qu'**elle contient un ou plusieurs stabilisants et/ou agents antibloquants.

**9.** Feuille de polyester selon l'une quelconque des revendications 1 à 8, **caractérisée en ce qu'**elle contient un piégeur de radicaux.

**10.** Feuille de polyester selon l'une quelconque des revendications 1 à 9, **caractérisée en ce qu'**elle contient un agent ignifuge.

**11.** Feuille de polyester selon l'une quelconque des revendications 6 à 10, **caractérisée en ce qu'**elle présente plus de deux couches et **en ce que** plus de 25 % du stabilisant UV se trouvent dans l'une des couches externes ou dans les deux couches externes.

**12.** Feuille de polyester selon l'une quelconque des revendications 6 à 11, **caractérisée en ce qu'**elle présente plus de deux couches et **en ce que** plus de 25 % du stabilisant UV se trouvent dans une couche externe.

**13.** Feuille de polyester selon l'une quelconque des revendications 6 à 12, **caractérisée ce qu'**aucune couche ne contient plus de 7 % en poids de stabilisant UV (par rapport à la masse de la couche dans laquelle est contenu le stabilisant UV).

**14.** Feuille de polyester selon l'une quelconque des revendications 1 à 13, **caractérisée en ce qu'**elle présente à 200 °C une rétraction dans la direction longitudinale et transversale inférieure à 10 %.

**15.** Feuille de polyester selon l'une quelconque des revendications 1 à 14, **caractérisée en ce qu'**elle présente à 100 °C un allongement inférieur à 3 %.

**16.** Feuille de polyester selon l'une quelconque des revendications 1 à 15, **caractérisée en ce qu'**elle présente un module E supérieur à 3000 $N/mm^2$ dans la direction longitudinale et transversale.

**17.** Feuille de polyester selon l'une quelconque des revendications 1 à 16, **caractérisée en ce qu'**elle présente une valeur F5 (force à un allongement de 5 % ) dans la direction longitudinale et transversale supérieure à 80 $N/mm^2$.

**18.** Procédé de fabrication d'une feuille de polyester selon la revendication 1, dans lequel le polymère ou le mélange polymère de la couche ou, dans le cas de feuilles présentant plusieurs couches, des couches individuelles, est comprimé dans des extrudeuses et liquéfié, puis moulé dans une filière pour produits multicouches sous la forme de films plats de masse fondue, pressées à travers une filière plate et extraites sur un cylindre de refroidissement et un ou plusieurs cylindres d'extraction, puis étirées biaxialement, thermofixées et ensuite enroulées, **caractérisé en ce que** le polymère contient, pour au moins une couche de la feuille, un stabilisant UV de formule (I).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10135795 A
- WO 9806575 A
- DE 69731750 A